(19) **Europäisches Patentamt / European Patent Office / Office européen des brevets**

(11) **EP 3 230 212 B1**

(12) # EUROPEAN PATENT SPECIFICATION

(45) Date of publication and mention of the grant of the patent:
**06.11.2019 Bulletin 2019/45**

(21) Application number: **15816397.2**

(22) Date of filing: **10.12.2015**

(51) Int Cl.:
**C02F 1/44** (2006.01)     **C02F 103/20** (2006.01)

(86) International application number:
**PCT/EP2015/079327**

(87) International publication number:
**WO 2016/092050 (16.06.2016 Gazette 2016/24)**

(54) **FILTRATION METHOD FOR REDUCING THE CONCENTRATION OF AN ACTIVE PHARMACEUTICAL INGREDIENT IN FISH TREATMENT WATER**

FILTRATIONSVERFAHREN ZUR VERRINGERUNG DER KONZENTRATION EINES AKTIVEN PHARMAZEUTISCHEN INHALTSSTOFFES IN FISCHBEHANDLUNGSWASSER

PROCÉDÉ DE FILTRATION POUR DIMINUER LA CONCENTRATION D'UNE SUBSTANCE PHARMACEUTIQUE ACTIVE DANS L'EAU DE TRAITEMENT DES POISSONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2014 GB 201421962**

(43) Date of publication of application:
**18.10.2017 Bulletin 2017/42**

(73) Proprietor: **Pharmaq AS**
**7863 Overhalla (NO)**

(72) Inventors:
• **AKSNES, Elin**
  **N-0213 Oslo (NO)**
• **ELLESAT, Kathrin**
  **N-0213 Oslo (NO)**
• **RIKARDSEN, Kjersti Steinsvoll**
  **N-0213 Oslo (NO)**
• **BREKKE, Stian**
  **N-0213 Oslo (NO)**
• **TORP, Eddy**
  **0283 Oslo (NO)**
• **BAUDOUIN, Stanislas**
  **17000 La Rochelle (FR)**

(74) Representative: **Mannion, Sally Kim**
**Zoetis**
**European Patent Department**
**Walton Oaks, Dorking Road**
**Tadworth**
**Surrey KT20 7NS (GB)**

(56) References cited:
**EP-A2- 0 264 904          CN-A- 101 665 817**
**US-A1- 2009 008 318**

• **BURRIDGE L ET AL: "Chemical use in salmon aquaculture: A review of current practices and possible environmental effects",** AQUACULTURE, ELSEVIER, AMSTERDAM, NL, vol. 306, no. 1-4, 15 August 2010 (2010-08-15), pages 7-23, XP027156509, ISSN: 0044-8486 [retrieved on 2010-05-25]
• Sara Rodriguez-Mozaz ET AL: **"Pharmaceuticals and pesticides in reclaimed water: Efficiency assessment of a microfiltration-reverse osmosis (MF-RO) pilot plant",** Journal of Hazardous Materials, vol. 282, 1 January 2015 (2015-01-01), pages 165-173, XP055477195, AMSTERDAM, NL ISSN: 0304-3894, DOI: 10.1016/j.jhazmat.2014.09.015
• GEMENDE ET AL: **"Tests for the application of membrane technology in a new method for intensive aquaculture",** DESALINATION, ELSEVIER, AMSTERDAM, NL, vol. 224, no. 1-3, 6 February 2008 (2008-02-06), pages 57-63, XP022455145, ISSN: 0011-9164, DOI: 10.1016/J.DESAL.2007.04.080

**Description**

**Field of the Invention**

In the broadest aspect, the present invention relates to a filtration method. More specifically, the invention relates to a filtration method for reducing the concentration of an active pharmaceutical ingredient in water.

**Background**

In the course of commercial fish farming it may be necessary to medicate fish, for example to control parasitic infestations. Medicating fish largely involves treatment with active pharmaceutical ingredients (API) which may be added, for example, to the feed or water used by the fish. However, a proportion of the API administered to the fish may remain in the water after the fish have been treated. An amount of this API may as a result pass into the environment, which may have a detrimental impact on non-target organisms such as crustacean species.

The possible environmental impact of API may be minimised if the API is reduced in concentration in the treatment water once the fish have been treated. However, the volume of water in which the fish are treated may be large, and processing of the used fish treatment water may therefore need to be rapid and efficient. There are drawbacks with all of the candidate methods for removing API from used fish treatment water. For example, filtration and adsorption methods may not provide sufficient processing speed and are based on disposable elements, which can make these approaches expensive. Alternatively, water in which fish have been treated may be processed to degrade the API and break it down into smaller compounds. This approach may, however, generate various degradation products, which may be toxic, and which must be monitored.

B. Gemende et al. suggest the use of membrane technology to remove API in water (see Desalination 224 (2008), pp. 57-63). In this method a single membrane is used.

It has now surprisingly been found that API may be effectively removed from water in which fish have been treated by filtering the water using a combination of filters having a pore size significantly larger than the size of the API molecules being targeted. This remarkable and unexpected finding has a number of significant advantages, in addition to substantially reducing the possibility and/or the amount of API being released to the environment. For example, the relatively large pore size allows a significant flow rate through the filters, maximising the amount of water that may be filtered. In addition, cheaper filter materials, with larger pore sizes, may be used.

**Summary**

In accordance with a first aspect of the present invention, there is provided a method of reducing the concentration of an active pharmaceutical ingredient (API) in used fish treatment water which is fresh water, brackish water or salt water. The API is a parasiticide selected from the group consisting of a benzoylurea, an avermectin, an organophosphate and a pyrethroid. The method comprises filtering the water using a microfilter having a pore size in the range of 0.1-7$\mu$m wherein the overall filtration efficiency is greater than 10%. The microfilter is comprised of a material selected from paper, a polymer, stainless steel, ceramic, or a microporous membrane. A pretreatment agent is added to the water prior to a prefiltration step with a filter having a pore size in the range of 10-200 $\mu$m. The API is a parasiticide for use in the treatment of fish.

The pretreatment agent may comprise a flocculant and/or a coagulant. The pretreatment agent may comprise ferric chloride.

The microfilter may have a pore size in the range of 0.1-5 $\mu$m.

The parasiticide is selected from the group consisting of: a benzoylurea; an avermectin; an organophosphate; and a pyrethroid. The avermectin may be emamectin. The organophosphate may be azamethiphos. The pyrethroid may be deltamethrin.

In some embodiments, the fish treatment water may be freshwater or saltwater.

In some embodiments, the benzoylurea may be a chitin synthesis inhibitor, such as hexaflumuron, lufenuron, or diflubenzuron.

The overall filtration efficiency is greater than 10%. The "overall filtration efficiency", also referred to as the "removal efficiency" or "removal rate", is the amount of API removed by the filtration process compared to an unfiltered control. The overall filtration efficiency takes account of prefiltration or any other additional steps. More specifically, the overall filtration efficiency is the difference between the initial (i.e. unfiltered) API concentration and the API concentration in the filtrate, expressed as a percentage of the initial concentration:

$$\text{Overall filtration efficiency} = (([API]^{initial} - [API]^{filtrate}) / [API]^{initial}) \times 100$$

In embodiments in which the API is hexaflumuron, the overall filtration efficiency may be greater than 80%. When the API is diflubenzuron, the overall filtration efficiency may be greater than 60%, and when the API is azamethiphos, the overall filtration efficiency may be greater than 50%.

In some embodiments, prior to filtration, the water may be incubated for less than 3 hours, or greater than hours.

In some embodiments, the filter material used for the microfiltration may comprise paper, a polymer, metal, such as stainless steel, ceramic material, or a microporous membrane. The filtration surface of the microfilter material may consist of or comprise a polymer selected from the group consisting of: a cellulose acetate (CA), a nitrocellulose (CN), a cellulose ester (CE), a polysulfone (PS), a polyether sulfone (PES), a polyacrilonitrile (PAN), a polyamide (PA), a polyimide (PI), a polyethylene (PE), a polypropylene (PP), a polytetrafluoroethylene (PTFE), a polyvinylidene fluoride (PVDF), and a polyvinylchloride (PVC). For example, the polymer filter may consist of or comprise polypropylene. When the filter material used for the microfiltration comprises paper, it may have a pore size of less than 4 $\mu$m such as less than 2 $\mu$m, and when the filter material used for the microfiltration comprises polypropylene, it may have a pore size of less than 2 $\mu$m such as less than 1 $\mu$m.

In some embodiments, the flow rate of water through the microfilter may be greater than 100 L/m$^2$/hr.

In some embodiments, the pore size of the filter material used for the microfiltration may be greater than 0.4 $\mu$m. In these embodiments, the flow rate of water through the microfilter may be greater than 900 L/m$^2$/hr.

The method further comprises the use of a second filter in series with the microfilter, and upstream of the microfilter. Thus, the second filter acts as a prefilter, for example to remove soil and other debris to prevent or reduce the possibility of the microfilter becoming clogged. The pore size of the prefilter is larger than the pore size of the microfilter.

**Brief Description of the Drawings**

Figure 1 shows the results of studies investigating the removal of API (hexaflumuron) from saltwater using filters with various different pore sizes; and,
Figure 2 shows the results of studies investigating the removal of API (hexaflumuron) from freshwater using filters with various different pore sizes.

**Detailed Description**

Filtration methods of reducing the concentration of API in used fish treatment water have not previously been described.

Fish Treatment

The present method may be used to reduce the concentration of API in used fish treatment water prior to further use or discharge of the water, thus reducing or removing any possibility of significant amounts of API passing to the environment.

In the present context, the term "used fish treatment water" is intended to refer to any water in which fish have been treated. In other words, any water which has contained fish and to which an API for the treatment of fish has been added or applied. In all cases, it is generally advantageous to reduce the concentration of the API in the water prior to reuse or discharge, in order to minimise the amount of API that may be released to the environment.

The term "fish treatment" refers to the administration of an API to fish. The medicament may comprise a treatment for parasite infestation, such as an infestation with sea lice. The disclosed method may be used to remove API from water in which any type of fish has been treated including, for example, food fish, breeding fish, aquarium, pond, river, and reservoir fish of all ages occurring in freshwater, saltwater, and brackish water. For example, bass, bream, carp, catfish, char, chub, cichlid, cobia, cod, eel, flounder, gourami, grayling, groupers, halibut, mullet, pangasius, plaice, pompano, roach, rudd, salmon, sole, tilapia, trout, tuna, whitefish, yellowtails, turbot, blue fin tuna, tench, amberjack, arowana, snakehead, puffers, croaker, rockfish, barramundi, meagre, sturgeon, lumpsucker, wrasse. Of particular note, the used fish treatment water may be water in which fish of the order Samoniformes, Siluriformes, Perciformes, Cypriniformes, Tetraodontiformes, Osteoglossiformes, Acipenseriformes or Scorpaeniformes have been treated. For example, the used fish treatment water may be water in which any of the following fish have been treated: salmon such as Atlantic and Pacific salmon; trout such as rainbow trout and sea trout; sea bass; sea bream; tilapia; pangasius; turbot; and tuna.

Administration of API to fish may comprise, for example, introducing an API into the water with the fish ("bath treatment"), or providing the fish with feed comprising an API ("in-feed treatment"). Bath treatment is effective for treating certain diseases and infections, and generally, the aim of bath treatments is to eliminate external infections, such as infections occurring on the gills, skin, and fins of fish. Bath treatments may also be used to treat internal infections. Depending on the type of fish being treated, the bath treatment may be performed in saltwater or freshwater. Bath treatment of fish may be conducted for different durations as appropriate. It would be advantageous to be able to quickly and efficiently significantly reduce the concentration of residual API from the used bath treatment water prior to discharge of the water into the environment, and this may be achieved by means of the presently described method.

API

The presently described method may be used to reduce the concentration of various different API in water.

The API is a parasiticide for use in the treatment of fish. The term "parasiticide" refers to any substance that is capable of depleting a fish parasite population, for example by killing or preventing growth or reproduction of the parasites, or otherwise causing the loss or removal of parasites from the host fish. The terms "treating the parasitic infestation of fish", "treatment of parasitic infestations of fish", "treatment of fish", "treating fish against parasites", "controlling parasites", "treating parasites", and similar terms, are intended to refer to prophylactic or responsive treatment, such as the control, elimination, protection against, and/or prevention of infestations in fish with parasites. The treatment of parasite infestations encompasses reducing the mean number of parasites infecting each fish in a fish population. The control of parasite infestations encompasses

preventing an increase in the mean number of parasites infecting each fish in a fish population.

Parasiticides as disclosed herein may be selected from the group consisting of Acetylcholineesterase (AchE) inhibitors, GABA-gated chloride channel antagonists, GABA-gated chloride channel inhibitors, Sodium channel modulators, Nicotinic acetylcholine receptor (nAChR) agonists, Nicotinic acetylcholine receptor (aAChR) allosteric activators, chloride channel activators, juvenile hormone mimics, modulators of Chordontonal Organs, inhibitors of mitochondrial ATP synthase, uncouplers of oxidative phosphorylation via disruption of the proton gradient, Nicotinic acethylcholine receptor (nAChR) channel blockers, inhibitors of chitin biosynthesis, type o and type 1, moulting disruptor, ecdysone receptor agonists, octopamine receptor agonists, mitochondrial complex III electron transport inhibitors, Mitochondrial complex I electron transport inhibitors, Voltage-dependent sodium channel blockers, inhibitors of acetylCoA carboxylase, Mitochondrial complex II electron transport inhibitors, Ryanodine receptor modulators, tubulin binders, acethylcholineesterase (AChE) mimetics, uncouplers of the oxidative phosphorylation.

The parasiticide may be any parasiticide that is suitable for use in controlling parasitic infestations in fish, in other words, that is not toxic to fish, and that is capable of treating fish against parasites, such as infestations with the parasites listed below. For example, the parasiticide may be: a sodium channel modulator, which may be a pyrethroid, such as deltamethrin, or an oxadiazine, such as indoxacarb; a chloride channel modulator, which may be an avermectin, such as emamectin, or ivermectin, or may be a macrolide such as moxidectin, or a milbemycin such as milbemycin oxime; a neurotoxin, which may be a neonicotinoid, such as nitenpyram, or a triazine, such as cyromazin; a pyridine, such as pymetrozine; or a benzoylurea, which may be a chitin synthesis inhibitor.

The parasiticide may be suitable for use in the treatment of fish against parasites. This includes, in particular, parasites of the order Siphonostomatoida (lus), Dactylogyridea (Diplectanum), Mazocraeidea (such as Sparycotyle, and Heterobothrium), Hymenostomatida (freshwater white spot), Capsalidae (Benedenia), Dactylopodida (P. perurans), Cyclopoida, Parabodonida (Cryptobia spp.), Scuticocilitida (ciliates), Gluegeida (L. salmonae), Bivalvulida (such as Myxobolus, Ceratomyxa and H. ictaluri), Monopisthocotylea (gyrodactylus), Strigeatida (blood flukes), Botriocephalidea (tapeworms), Spirurida (nematodes), Arguloida (carp lice in freshwater) and Ascaridida (Anisakis) and genus Cryptocaryon (white spot in seawater), Diplostomum (eye fluke in freshwater), and Enteromyxum (E. leei). In particular, the following families of parasite may be targeted by the parasiticide: Caligidae, Cecropidae, Dichelesthiidae, Lernaeopodidae, Pandaridae, Pennellidae, Sphyriidae, Lernaeidae, Bomolochidae, Chondracanthidae, Ergasilidae, Philichthyidae, and Argulidae. Of particular interest are parasites of the genera *Dissonus, Caligus* (including in particular, *C. curtus, C. elongatus, C. clemensi, C. rogercresseyii*), and *Lepeophtheirus* (including *L. salmonis*).

Infestation with sea lice in particular (such as *Lepeophtheirus salmonis, Caligus elongatus,* and *Caligus rogercresseyi*) is considered to be one of the most important disease problems in the farming of salmonids, especially in Atlantic salmon (*Salmo salar*) and rainbow trout (*Oncorhynchus mykiss*).

The parasiticide may be suitable for bath treatment and/or in-feed treatment of fish and may target a broad range of parasites, or may be specific for a small group of parasites, such as an individual type of parasite.

In the present invention, the API may be, for example: a benzoylurea; an avermectin such as emamectin; an organophosphate such as azamethiphos; or a pyrethroid such as deltamethrin.

When the API is a benzoylurea, it is preferably a chitin synthesis inhibitor, such as bistrifluron, chlorfluazuron, flucycloxuron, flufenoxuron, hexaflumuron, novaluron, noviflumuron, buprofezin, diflubenzuron, fluazuron, lufenuron, and teflubenzuron. The inhibitors may be present in the antiparasitic formulation in the free form, or in any active form, such as in the form of any veterinary acceptable salt. Preferably, the chitin synthesis inhibitor may be hexaflumuron, lufenuron, or diflubenzuron.

Filter Pore Size

The disclosed method of reducing the concentration of an API in water involves microfiltering the water. Filters differ according to their porosity and ability to retain particles with certain sizes. Filtration systems that are capable of removing smaller particles from water, such as ultrafiltration, nanofiltration, and reverse osmosis filter systems are rated according to their nominal molecular weight limit (NMWL) or their molecular weight cut off (MWCO). For example, nanofiltration retains particles with a weight of 100 - 1000 Da (g/mol). More coarse filters, that are capable of removing larger particles from water, are generally classified according to their pore size, wherein, for example, a filter with a pore size of 1 $\mu$m will retain particles that are larger than 1 $\mu$m.

Generally, API are small molecules, and have a molecular weight of less than 1000 g/mol. For example, the molecular weights of hexaflumuron, diflubenzuron, azamethiphos, and deltamethrin are 461 g/mol, 311 g/mol, 325 g/mol, and 505 g/mol, respectively. The absolute size in the largest dimension of each molecule of compounds having molecular weights in this range is generally less than about 2nm. As a result, these compounds would be expected to be retained by nanofiltration systems, which have pore sizes of about 1-10 nm and retain particles with a weight of 100 - 1000 g/mol. APIs would not be expected to be retained by filters with a larger pore size than this, as the molecules would be expected to pass through the pores of the filter. Preferably, the method is suitable for use with API that have molecular weights less than 5000, 4500, 4000, 3500, 3000, 2500, 2000, 1500, or 1000 g/mol, and which have an absolute size in the largest dimension of less than about 25, 20, 15, 10, or 5 nm.

However, it has now surprisingly been found that it is possible to effectively remove small molecules, such as APIs, from water using filters with pore sizes significantly larger than those of nanofilters, such as filters having pore sizes greater than 0.05 $\mu$m or 0.1 $\mu$m. For the purposes of the present specification, "microfiltration" is to be interpreted as referring to a method of filtration using a filter having a pore size in the range of 0.1-10$\mu$m.

The present invention comprises the use of a microfilter having a pore size in the range of 0.1-7 $\mu$m, such as 0.1-5 $\mu$m. For example, the microfilter may have a pore size of less than about 4.8 $\mu$m, 4.5 $\mu$m, 4.2 $\mu$m, 4.0 $\mu$m, 3.8 $\mu$m, 3.5 $\mu$m, 3.2 $\mu$m, 3.0 $\mu$m, 2.8 $\mu$m, 2.5 $\mu$m, 2.4 $\mu$m, 2.2 $\mu$m, 2.0 $\mu$m, 1.8 $\mu$m, 1.5 $\mu$m, 1.2 $\mu$m, and is preferably less than 1.0 $\mu$m or 0.8 $\mu$m. The pore size may be greater than about 0.2 $\mu$m, 0.3 $\mu$m, 0.4 $\mu$m, 0.45 $\mu$m, or 0.5 $\mu$m.

This finding that small molecules, such as APIs, can be effectively removed from used fish treatment water using microfilters with pore sizes much larger than would be expected, specifically, using microfilters having a pore size greater than about fifty times the size of the API molecules, is extremely surprising. Moreover, it is particularly advantageous because the method has been found to work with various different types of API, which have different chemical and physical properties.

The finding that the concentration of API can be reduced by microfiltration in this way is particularly advantageous because it means that the concentration of API in the water can easily be significantly reduced, minimising the possibility of API being passed to the environment. As a result of this finding, the water can be processed effectively with a high rate of throughput due to the relatively large filter pore size. In addition, filter materials with larger pore sizes are generally relatively inexpensive, and therefore the present method offers the possibility of reducing the concentration of API in a cheap and simple manner.

Overall Filtration Efficiency

In the present context, "retaining", "removing", or "filtering" an API from water refers to reducing the concentration of the API in the water. In other words, removing the API from the fish treatment water does not necessarily refer to removing all of the API from the water, but simply refers to a filter process in which the API concentration in the water prior to filtration is greater than the API concentration in the filtrate. The "overall filtration efficiency", also referred to as the "retention", "removal efficiency", or "removal rate", is the percentage of API that is removed from the water by the filtration process. In addition to microfiltration, the overall filtration efficiency takes account of prefiltration or any other additional steps.

The "overall filtration efficiency", is the amount of API removed by the filtration process compared to an unfiltered control. It is calculated as the difference between the initial (i.e. unfiltered) API concentration and the API concentration in the filtrate, expressed as a percentage of the initial concentration:

$$\text{Overall filtration efficiency} = (([API]^{initial} - [API]^{filtrate}) / [API]^{initial}) \times 100$$

The overall filtration efficiency may depend on a number of factors, including the type of filter material used, the API, the concentration of the API, the salinity of the water to be filtered, the amount of organic material in the treatment water, the biomass treated and the incubation period of the API in the water prior to filtration.

The overall filtration efficiency of the method of reducing the concentration of an API is greater than about 10%, such as greater than about 15%, 20%, 25%, or 30%.

The overall filtration efficiency may depend on the specific API being filtered and with respect to some APIs, such as diflubenzuron and azamethiphos, the overall filtration efficiency may be greater than 30%, 40%, or 50%, and is preferably greater than 55%, 60%, or 65%. Indeed, with respect to some APIs, such as hexaflumuron, the overall filtration efficiency may even be greater than 70%, 80%, or 90%, and is preferably greater than 95%, 97%, or 99%.

Filter Material

Various filter materials may be used in the disclosed method. In particular, microfiltration using filters comprising paper, stainless steel, polymer filters, and also ceramic filters and/or microfiltration membranes has been found to be capable of significantly reducing the API concentration. Polymer filters are filters in which the filtration surface of the microfilter consists of or comprises a synthetic polymer such as a cellulose acetate (CA), a nitrocellulose (CN), a cellulose ester (CE), a polysulfone(PS), a polyether sulfone (PES), a polyacrilonitrile (PAN), a polyamide (PA), a polyimide (PI), a polyethylene (PE), a polypropylene (PP), a polytetrafluoroethylene (PTFE), a polyvinylidene fluoride (PVDF), and a polyvinylchloride (PVC). For example, in some embodiments, the polymer filter may consist of or comprise polypropylene.

Different API may be filtered with slightly different filtration efficiencies when different filter materials are used. Generally, the preferred filter materials for use in the disclosed microfiltration method are paper and polymers such as polypropylene. Both paper and polymer filters have been found to be capable of substantially reducing the API concentration for all of the API tested.

Microfiltration of some API, such as hexaflumuron, may be most efficient using paper filters. Paper filters with larger pore sizes, such as 4 $\mu$m, are preferred for use in the removal of hexaflumuron from saltwater, whereas paper filters with smaller pore sizes, such as less than 0.5 $\mu$m, are preferred for use in the removal of hexaflumuron from freshwater. Overall filtration efficiencies for the removal of hexaflumuron using paper filters may be up to 90%, 95%, or preferably 99% from saltwater, and up to 80%, 85%, or preferably 92% from freshwater.

Microfiltration or other API may be more efficient using polymer niters such as polypropylene filters. Generally, polymer filters are preferred for use in the removal of API from saltwater. For example, using polymer filters (such as a polypropylene microfilter): for azamethiphos, the overall filtration efficiency is preferably more than $_{50}$%; for diflubenzuron, the overall filtration efficiency is preferably more than 60%; and for deltamethrin, the overall filtration efficiency is preferably more than 70%. In general, using polymer filters, the overall filtration efficiency is greater than 10%.

In the case of hexaflumuron specifically, for optimal overall filtration efficiency, microfiltration is preferably conducted using either paper filters having pore sizes of 0.4-4 $\mu$m, or polymer filters, such as polypropylene filters, having pore sizes of 1-2 $\mu$m, preferably about 1 $\mu$m.

Paper filters have the advantage of being cheaper than other filter materials. Polymer filters, on the other hand, have the advantage of being compact and more easily stored. Polymer filters may also have the advantage that they may be cleaned, and therefore reused. They may even be cleaned in situ, for example, by back-flushing, reducing the man-power required to operate the filters, and thus further reducing the cost of the process.

A plurality of microfilters may be used. For example, a plurality of layers of paper filter material, such as 2, 3, 4, or 5 sheets of paper filter material may be used in combination.

Prefiltration

A plurality of different filters, made from different materials, and/or having different pore sizes may be used in series. For example, soiling and debris in the used fish treatment water may rapidly clog the microfilter, and therefore in this case, it may be advantageous to use an additional filter, as a prefilter (i.e. upstream of the microfilter), to remove soil and other physical contaminants. The pore size of the prefilter will generally be larger than the pore size of the microfilter. Large pore filters, such as large pore polypropylene mesh filters, may be particularly useful for this purpose. Suitable pore sizes of the prefilter may be selected on the basis of the degree of sediment and/or agglomerate (or floc) in the water to be filtered. For example, the pore size of the prefilter is in the range of 10-200 $\mu$m, such as up to 100 $\mu$m, 150 $\mu$M, 200 $\mu$m, and the pore size of the prefilter is greater than 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, or 100 $\mu$m. The present invention makes thus use of a prefilter having a pore size in the range of 10-200 $\mu$m, such as 10-50 $\mu$m, or 15-25 $\mu$m, which has been found to be particularly effective, and to significantly increase the flow rate, duration and capacity before plugging of the subsequent microfiltration step, and to therefore result in advantageous and surprisingly large cost and efficiency savings.

By way of an example, the prefiltration step may involve mechanical filtration using a screen filter. In other words, a screen material may be used to remove solids, wherein the water will pass through the screen but the solids will not. There are many different materials that may be used as screens, including mesh screens, plastic woven screens and filter mats. Screen filters may be static (where the screen is held stationary and the water passes through it), or moving, where the screen moves so that its entire surface may be exposed to the water to be filtered. Screen filters are advantageous because they are they are cheap to assemble and easy to operate. In the simplest case, a screen filter may consist of the screen material and a retaining support. The screen is preferably easily removable to assist removal of accumulated solids.

The prefilter may be an automatic, self-cleaning filter. For example, the prefilter may be a drum screen filter, wherein the screen is attached to a drum and the unfiltered water enters the inside of the drum and flows through the screen to the outside. Alternatively, the prefilter may be a belt screen filter, in which the screen takes the form of a rotating belt. In both cases, the system may comprise a water-activated switch. When the screen starts to clog with solids, the water can't pass through the screen as rapidly, and as a result, unfiltered water accumulates. Once a threshold level of unfiltered water is reached, the accumulated water trips the switch and activates a cleaning mechanism. For example, in some embodiments, high pressure sprays may be activated to clean the collected solids off the screen and direct the waste into a dedicated outlet. The use of automatic, self-cleaning filters has been found to be advantageous in the filtration of used fish treatment water, and in particular for use in larger systems with greater levels of fish biomass.

Pretreatment

Prior to prefiltration, the water is pretreated by the addition of a pretreatment agent. The pretreatment agent may condition the water to be filtered to improve the efficiency of the prefiltration step. For example, the pretreatment agent may be a flocculant or a coagulant.

Coagulants neutralize the negative electrical charge on particles, which destabilizes the forces that keep colloids apart. Coagulants may comprise positively charged molecules that neutralise this negative electrical charge. Inorganic coagulants, organic coagulants or a combination of both may be used as a pretreatment agent to treat the water for improved removal of suspended solids. When an inorganic coagulant is added to water containing a colloidal suspension, the metal ion from the coagulant neutralizes the negatively charged electric double layer of the colloid. With an organic coagulant, the positive charge may be provided by an amine group attached to the coagulant molecule. Examples of coagulants that may be used in the pretreatment step include aluminium salts, iron salts, and polyelectrolytes.

Flocculants gather the destabilized particles together and cause them to agglomerate (forming a "floc") and drop out of solution. Examples of flocculants that may be used in the pretreatment step include low, medium and high molecular weight polymers.

The pretreatment agent may consist of or comprise, for example, one or more of aluminium sulphate, aluminium chloride, polyaluminium chloride (PACL) & aluminium chlorohydrate (ACH), ferric sulphate, ferrous sulphate, and ferric chloride.

A preferred pretreatment agent is ferric chloride, which functions as both a coagulant and a flocculant. Ferric chloride reacts in water with hydroxide alkalinity to form various hydrolysis products that incorporate $Fe(OH)_3$. These compounds possess high cationic charge which allows them to neutralize the electrostatic charges found on colloidal compounds and also to bind to negatively charged particles, including the ferric hydroxide itself. This ability to bind to itself is the mechanism for the formation of floc aggregates and the basis for ferric chloride's flocculation abilities. The floc particles of ferric hydroxide are more discrete and dense than those formed by other flocculants, and have a higher cationic charge density, that promotes faster sedimentation in general and specifically, better sedimentation in cold water. The high ratio of cationic charge to total mass also makes the ferric chloride hydrolysis products more reactive and adsorptive with emulsified and semi-emulsified organic matter. Additionally, the sludge resulting from the use ferric chloride is generally much more dewaterable than that formed by other flocculants. One of the other characteristics of ferric chloride is its ability to form floc over a very wide pH range. Ferric chloride is also generally very cheap because it is generated as a waste material from steel making operations.

The amount of pretreatment agent required may be determined on the basis of the nature of the water to be filtered.

API concentration

Prior to filtration, the water to be filtered may comprise API at any suitable concentration or amount. For example, typical concentrations at which API are used in bath treatments may be around 0·001-20 ppm (mg/L).

Generally, the higher the API concentration the greater the overall filtration efficiency of the presently described filtration method.

In some embodiments, the method of reducing the concentration of an API in water does not involve or require the precipitation of the API. In other embodiments a precipitate of the API may be formed. Preferably, the method does not comprise any kind of specific step or procedure in which the API is precipitated. If the method comprises the use of a pretreatment agent, then the floc or agglomerate formed may contain an amount of API, merely as a result of the API being trapped in the sediment. For the purposes of the present disclosure, API found in the floc or agglomerate is not considered to be precipitated API. The present method is concerned with the removal of API by means of a microfiltration process, and the prefiltration and pretreatment steps are merely concerned with removing material from the water that may otherwise interfere with, and reduce the efficiency of, the microfiltration step. Thus, the presently described method does not comprise any kind of specific step or procedure after the prefiltration step in which the API may be precipitated.

Salinity

API may be administered to fish by means of bath treatment in saltwater (seawater) or freshwater. For example, a parasiticide may be administered to smolt by means of saltwater bath treatment in well boats during transportation to sea sites, or by being transferred to a well boat for treatment during the grow out phase at sea. Moreover, prior to transportation of smolt to sea sites, they may be treated with an API such as a parasiticide by means of freshwater bath treatment in tanks at hatcheries.

Slightly different filtration efficiencies and flow rates may be observed with different filter materials depending whether the water being microfiltered is freshwater or saltwater.

In the microfiltration of API from freshwater, for example, filter pore sizes in the range of 0.1-2 $\mu$m, such as 0.2-1 |_im may be preferred.

In contrast, in the microfiltration of API from saltwater, filter pore sizes in the range of 0.1-5 $\mu$m may be preferred.

Using polymer filters, such as polypropylene filters, higher flow rates may be obtained in the microfiltration of freshwater compared to saltwater. In the case of freshwater, the average flow rate may be 2500-16000 L/m$^2$/hr, such as, for example, greater than 2500, 3000, 3500, 4000, 4500, 5000, 5500, 6000, 6500, 7000, or 7500 L/m$^2$/hr, and up to 8000, 9000, 10000, 11000, 12000, 13000, 14000, or 15000 L/m$^2$/hr. In contrast, with saltwater, the average flow rate may be 900-2000 L/m$^2$/hr, such as, for example, greater than 950, 1000, 1050, 1100, 1150, 1200, 1250, 1300, 1350, 1400, 1450, 1500 or 1550 L/m$^2$/hr, and up to 1600, 1650, 1700, 1750, 1800, 1850, 1900, or 1950 L/m$^2$/hr.

In contrast, the flow rates that may be obtained with paper filters are not significantly affected by the salinity of the water. The average flow rate using a paper filter may be about 800-6000 L/m$^2$/hr, such as, for example, greater than 1000, 1250, 1500, 1750, 2000, 2250, 2500, 2750, 3000, 3250, or 3500 L/m$^2$/hr, and up to 3750, 4000, 4250, 4500, 4750, 5000, 5250, 5500, or 5750 L/m$^2$/hr..

Generally, the average flow rate through the microfilter may be in the range of 100-20,000 L/m$^2$/hr, such as 200-19000, 400-18000, or 600-17000 L/m$^2$/hr. On larger scales, for example using a 20m$^2$ membrane, the average flow rate may be around 500-5000 L/m$^2$/hr, such as 1000-4000, 2000-3000, or up to about 2500 L/m$^2$/hr.

Incubation Time

Typical fish treatment durations are less than about 3 hours, such as between about 30 minutes and 2 hours. However, in some cases, the water to be filtered may be incubated, for example for more than 6 hours, more than 12 hours, more than 18 hours, or more than 24 hours, prior to filtration in order to increase the filtration efficiency. If the method includes a prefiltration step, then the water may be incubated before or after prefiltration.

For example, following incubation for about 24 hours, the overall filtration efficiency may be greater than 20%, or greater than 50%, and is preferably greater than 70%. This may represent an increase in the overall filtration efficiency versus typical fish treatment incubation times of more than two-fold, four-fold, or six-fold.

**Examples**

The invention will now be explained in further detail in the following Examples, which demonstrate the development of the claimed filtration techniques to remove antiparasitic compounds from fish treatment water.

Example 1 - Removal of hexaflumuron from saltwater

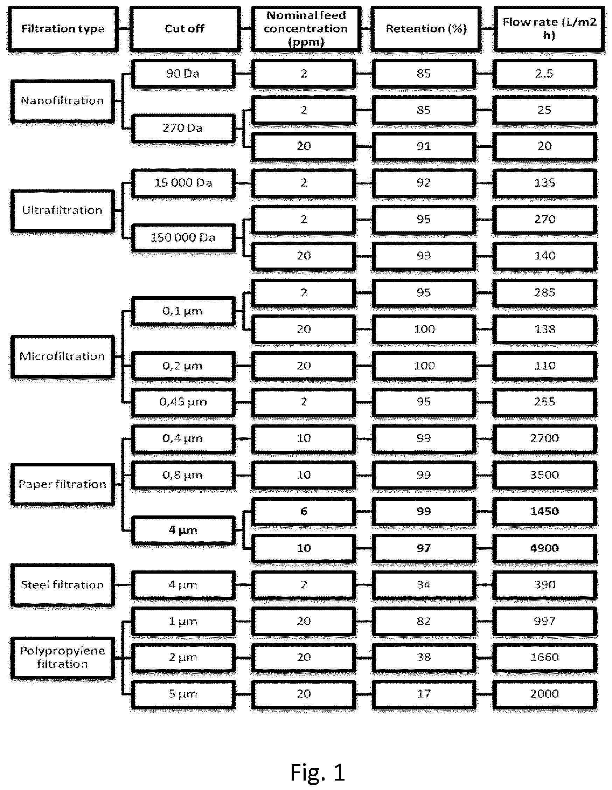

A possible scenario for treatment of smolts against parasites is in well boats during transportation to sea sites, or by fish being transferred to a well boat for treatment during the grow out phase at sea. Filtration of the water afterwards to remove the active from the saltwater would be useful. Different filters from 90 Da nanofilters up to 5 $\mu$m stainless steel- and polymer (polypropylene) filters have been tested at different hexaflumuron concentrations (2 - 20 ppm) in saltwater having a salinity the same as that of seawater (Figure 1).

Paper filters with a pore size of 4 $\mu$m resulted in best API retention (97%) and highest flow rates (4900 L/m$^2$/h) compared to other filters tested. The size of the lab scale filters used in this study was 10 x 20 cm (0.02 m$^2$).

Example 2 - Removal of hexaflumuron from freshwater

Salmonids are hatched and live their first period in freshwater. Prior to transportation of smolts to sea sites, fish may be treated with hexaflumuron in freshwater tanks in hatcheries.

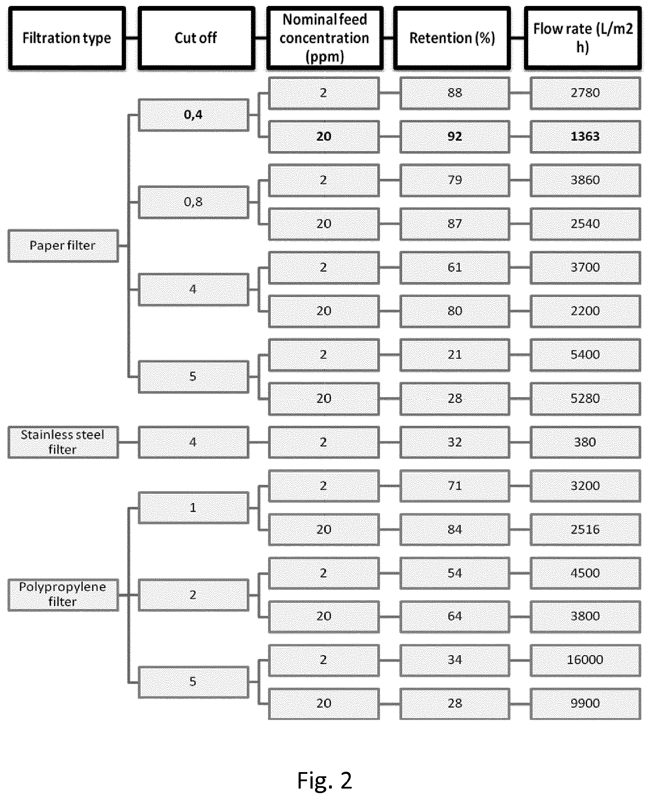

Several microfilter membranes have been tested for hexaflumuron removal efficiency from freshwater, which are summarised below (Figure 2).

The filtration efficiencies of hexaflumuron from freshwater using various different filters and pore sizes were found to be different to that from saltwater. To achieve 90% hexaflumuron removal from freshwater using paper filters, filter cut offs (pore sizes) smaller than 0.5 $\mu$m were required. Good removal of hexaflumuron from freshwater was also achieved with polypropylene filters.

Example 3 - Removal of other APIs from saltwater

In view of the results with hexaflumuron, the filtration efficiency of similar paper and polymer filters on the removal of active pharmaceutical ingredients (APIs) of other commercial or potential sea lice pharmaceuticals from saltwater was investigated. The compounds tested included diflubenzuron, lufenuron, emamectin, deltamethrin and azamethiphos. All compounds were formulated with an N-methylpyrrolidone solvent (Pharmasolve) and a macrogolglycerol ricinoleate emulsifier (kolliphor EL). Whatman filters 595 ½ (VWR) with a pore size of 4-7 $\mu$m were used for paper filtration. Mini Profile® Capsule Filters (BYA015P6, Profile star, Pall) with a pore size of 1.5 $\mu$m were used for polymer (polypropylene (PP)) filtration. The polymer filters used to filter diflubenzuron were Opticap XL 5 Capsule polypropylene (PP) filters (Millipore) with a pore size of 1.0 $\mu$m.

**Study a) Direct filtration**

Table 1 shows the API concentrations measured in the filtered and unfiltered samples as well as the respective filtration efficiencies. The samples were directly filtered after preparation of working solutions, with no significant incubation.

Table 1.

| Compound | Concentration (mg/L) | | | Filtration efficiency (%) | |
|---|---|---|---|---|---|
| | Control (unfiltered) | Paper | PP | Paper | PP |
| Diflubenzuron | 1.60 | 0.86 | 0.49 | 46 | 69 |
| Deltamethrin | 2.10 | 2.00 | 1.90 | 5 | 10 |
| Lufenuron | 2.70 | 2.60 | 2.30 | 4 | 15 |
| Emamectin | 2.20 | 2.10 | 1.90 | 5 | 14 |
| Azamethiphos | 0.54 | 0.53 | 0.25 | 2 | 54 |

Both paper and polymer filters reduced the amount of API for all compounds tested. Best removal efficiency was observed for diflubenzuron with removal rates of 46% and 69% by paper and PP filtration, respectively, as well as for azamethiphos with 54% removal by PP filtration compared to control. Polymer filtration was more efficient than paper filtration. More than 10% removal has been achieved by PP filtration for all compounds.

**Study b) Filtration following 24h incubation**

Solutions were prepared in saltwater as described above, and were incubated for 24 hours at room temperature in the dark. The capacity of paper and polymer (polypropylene) filters to remove the APIs was then tested.

Table 3.

| Compound | Concentration (mg/L) | | | Filtration efficiency (%) | |
|---|---|---|---|---|---|
| | Control (Unfiltered) | Paper | PP | Paper | PP |
| Deltamethrin | 0.063 | 0.049 | 0.018 | 22 | 71 |
| Lufenuron | 2.2 | 2.0 | 1.9 | 9 | 14 |

Deltamethrin and lufenuron incubated for 24 hours were removed by both paper and PP filters. As observed in Study a), PP filters were more efficient than paper filters. Largest removal was achieved for deltamethrin with 22% and 71% for PP and paper filters respectively.

Example 4 - Impact of Pretreatment Techniques on Sea Water Microfiltration

Water used for this study was pumped from a nearby fjord to the station. This water was found to contain very few suspended particles. Therefore, to replicate used fish treatment water, 20 g of fish food was added per 100 L of sea water.

A Bollfilter was used to investigate prefiltration using a stainless steel filter with pore sizes of 25 or 50 $\mu$m. The Bollfilter candle used in the experiment was a stainless steel cylinder, 0.40m in length and 0.025m in diameter. The filter surface area was 0.314m$^2$. It is connected at the bottom of a water tank. Once the filter is plugged the cylinder is disconnected and washed with clear water.

A Hydrotech filter was used to investigate prefiltration using filter pore sizes of 10 or 18 $\mu$m. The Hydrotech test tube used for this study simulates a disc filter operation. It consists of a 1m PEH plastic tube, and the filter surface area was 0.0044m$^2$.

The microfiltration unit was composed of a centrifugal pump connected to a filtering module with a maximum output pressure of 1 bar for 3 L /min. There are three pressure sensors. Two polymer (polypropylene) filters, having a surface area 0.015 m$^2$, and each having a pore size of 1 $\mu$m were used.

The results of the study are summarised in the following table.

| | Sea Water (No Fish Food) | Prefilter Type | | | | | | |
|---|---|---|---|---|---|---|---|---|
| | | No Prefiltration | | Bollfilter ($\mu$m) | | Hydrotech ($\mu$m) | | |
| | | Bollfilter | Hydrotech | 50 | 25 | 25 | 18 | 10 |
| **Prefiltration** ave. flowrate (Lh$^{-1}$/m$^2$) | | | | | 52087 | 35190 | 30090 | 21420 |
| **Microfiltration** ave. flowrate (Lh$^{-1}$/m$^2$) | 5500 | 1192 | 841 | 2472 | 1818 | - | 2216 | 2469 |
| **Microfiltration** duration before plugging (min) | No plugging | 30 | 28 | 52 | 56 | - | 85 | 85 |
| **Microfilter** capacity before plugging (L/m$^2$) | >3500 | 600 | 400 | 1700 | 1850 | - | 2833 | 2833 |

In all cases, prefiltration was found to increase the time to clogging of the microfilter by at least 40%.

The flowrate through the microfilter was found to increase significantly (by more than 100% in most cases).

The microfilter membrane capacity was found to be up to 2800 L/m$^2$ with 10 and 18$\mu$m prefiltration compared to a maximum of 600 L/m$^2$ without pretreatment.

The flow rate observed for the filtration of sea water without fish food was found to be 5500 L/h/m$^2$. When the water was spiked with fish feed, the average flowrate was significantly reduced. Using prefiltration with 10 and 18$\mu$m prefilter the average flowrate was found to return to approximately 50% of the flowrate observed for the filtration of sea water without fish food.

From this study it is clear that prefiltration increases the efficiency and cost effectiveness of the microfiltration of API from used fish treatment water. In order to address various issues and advance the art, the entirety of this disclosure shows by way of illustration various embodiments in which the claimed invention may be practiced and provide for an improved method of reducing the concentration of an API in water. The advantages and features of the disclosure are of a representative sample of embodiments only, and are not exhaustive and/or exclusive. They are presented only to assist in understanding and teach the claimed features. It is to be understood that advantages, embodiments, examples, functions, features, and/or other aspects of the disclosure are not to be considered limitations on the disclosure as defined by the claims or limitations on equivalents to the claims, and that other embodiments may be utilised and modifications may be made without departing from the scope of the disclosure. Various embodiments may suitably comprise, consist of, or consist essentially of, various combinations of the disclosed elements, components, features, parts, steps, means, etc.

**Claims**

1. A method of reducing the concentration of an active pharmaceutical ingredient (API) in used fish treatment water; wherein said treatment water is fresh water, brackish water or salt water, and wherein:

   (a) the API is a parasiticide selected from the group consisting of a benzoylurea, an avermectin, an organophosphate, and a pyrethroid for use in the treatment of fish; and,
   (b) the method comprises filtering the water using a microfilter having a pore size in the range of 0.1-7 $\mu$m;

   and wherein overall filtration efficiency is greater than 10%; and wherein the microfilter is comprised of a material selected from paper, a polymer, stainless steel, ceramic, or a microporous membrane; and wherein a pretreatment agent is added to the water prior to a prefiltration step with a filter having a pore size in the range of 10-200$\mu$m.

2. A method as claimed in claim 1, wherein the microfilter has a pore size in the range of 0.1-5 $\mu$m.

3. A method as claimed in claim 1, wherein the pretreatment agent comprises a flocculant and/or a coagulant.

4. A method as claimed in claim 3, wherein the pretreatment agent comprises ferric chloride.

5. A method as claimed in claim 1, wherein the parasiticide is selected from the group consisting of: hexaflumuron, lufenuron, diflubenzuron, emamectin, azamethiphos and deltamethrin.

6. A method as claimed in claim 5, wherein the parasiticide is hexaflumuron, lufenuron or diflubenzuron.

7. A method as claimed in any of claims 1-6, wherein the parasiticide is hexaflumuron; and wherein the microfilter is comprised of a material selected from paper or a polypropylene polymer.

8. A method as claimed in claim 7, wherein the polypropylene microfilter has a pore size of less than 2 $\mu$m, and the paper microfilter has a pore size of less than 4 $\mu$m.

9. A method as claimed in claim 8, wherein hexaflumuron is filtered from salt water using a paper microfilter with a pore size of 4 $\mu$m, or hexaflumuron is filtered from fresh water with a paper microfilter with a pore size of less than 0.5 $\mu$m; and wherein the filtration efficiency is up to 90% from salt water and up to 80% from fresh water.

10. A method as claimed in claim 9, wherein hexaflumuron is filtered from salt water with a filtration efficiency of up to 99%.

11. A method as claimed in claim 9, wherein hexaflumuron is filtered from fresh water with a filtration efficiency of up to 92%.

**Patentansprüche**

1. Verfahren zum Verringern der Konzentration eines aktiven pharmazeutischen Inhaltsstoffs (API) in verwendetem Fischbehandlungswasser, wobei das Behandlungswasser frisches Wasser, Brackwasser oder Salzwasser ist, und wobei:

   (a) der API ein Parasitizit, ausgewählt aus der Gruppe, bestehend aus einem Benzoylharnstoff, einem Avermectin, einem Organophosphat und einem Pyrethroid, zur Verwendung bei der Behandlung von Fischen, ist; und
   (b) das Verfahren Filtrieren des Wassers unter Verwendung eines Mikrofilters mit einer Porengröße im Bereich von 0,1 - 7 $\mu$m umfasst;

   und wobei die Gesamtfiltrationseffizienz größer als 10 % ist; und wobei der Mikrofilter aus einem Material, ausgewählt aus Papier, einem Polymer, Edelstahl, Keramik oder einer mikroporösen Membran, besteht; und wobei ein Vorbehandlungsmittel vor einem Vorfiltrationsschritt mit einem Filter mit einer Porengröße im Bereich von 10 - 200 $\mu$m zu dem Wasser gegeben wird.

2. Verfahren wie in Anspruch 1 beansprucht, wobei der Mikrofilter eine Porengröße im Bereich von 0,1 - 5 $\mu$m hat.

**3.** Verfahren wie in Anspruch 1 beansprucht, wobei das Vorbehandlungsmittel ein Ausflockungsmittel und/oder ein Koagulationsmittel umfasst.

**4.** Verfahren wie in Anspruch 3 beansprucht, wobei das Vorbehandlungsmittel Eisen(III)-chlorid umfasst.

**5.** Verfahren wie in Anspruch 1 beansprucht, wobei das Parasitizit ausgewählt ist aus der Gruppe, bestehend aus: Hexaflumuron, Lufenuron, Diflubenzuron, Emamectin, Azamethiphos und Deltamethrin.

**6.** Verfahren wie in Anspruch 5 beansprucht, wobei das Parasitizit Hexaflumuron, Lufenuron oder Diflubenzuron ist.

**7.** Verfahren wie in einem der Ansprüche 1 - 6 beansprucht, wobei das Parasitizit Hexaflumuron ist; und wobei der Mikrofilter aus einem Material, ausgewählt aus Papier oder einem Polypropylenpolymer, besteht.

**8.** Verfahren wie in Anspruch 7 beansprucht, wobei der Polypropylen-Mikrofilter eine Porengröße von weniger als 2 $\mu$m hat und der Papiermikrofilter eine Porengröße von weniger als 4 $\mu$m hat.

**9.** Verfahren wie in Anspruch 8 beansprucht, wobei Hexaflumuron unter Verwendung eines Papiermikrofilters mit einer Porengröße von 4 $\mu$m aus Salzwasser filtriert wird, oder Hexaflumuron mit einem Papiermikrofilter mit einer Porengröße von weniger als 0,5 $\mu$m aus frischem Wasser filtriert wird; und wobei die Filtrationseffizienz bis zu 90 % aus Salzwasser und bis zu 80 % aus frischem Wasser beträgt.

**10.** Verfahren wie in Anspruch 9 beansprucht, wobei Hexaflumuron mit einer Filtrationseffizienz von bis zu 99 % aus Salzwasser filtriert wird.

**11.** Verfahren wie in Anspruch 9 beansprucht, wobei Hexaflumuron mit einer Filtrationseffizienz von bis zu 92 % aus frischem Wasser filtriert wird.

## Revendications

**1.** Procédé de réduction de la concentration d'un ingrédient pharmaceutique actif (IPA) dans de l'eau usée de traitement de poissons ; dans lequel ladite eau de traitement est de l'eau douce, de l'eau saumâtre ou de l'eau salée, et dans lequel :

(a) l'IPA est un parasiticide choisi dans un groupe consistant en une benzoylurée, une avermectine, un organophosphate, et un pyréthroïde pour une utilisation dans le traitement de poissons ; et,
(b) le procédé comprend la filtration de l'eau à l'aide d'un microfiltre ayant une taille de pore dans la plage de 0,1 à 7 $\mu$m ;

et dans lequel un rendement de filtration global est plus grand que 10 % ; et dans lequel le microfiltre est composé d'un matériau choisi parmi du papier, un polymère, de l'acier inoxydable, une céramique, ou une membrane microporeuse ; et dans lequel un agent de pré-traitement est ajouté à l'eau avant une étape de pré-filtration avec un filtre ayant une taille de pore dans la plage de 10 à 200 $\mu$m.

**2.** Procédé selon la revendication 1, dans lequel le microfiltre a une taille de pore dans la plage de 0,1 à 5 $\mu$m.

**3.** Procédé selon la revendication 1, dans lequel l'agent de pré-traitement comprend un floculant et/ou un coagulant.

**4.** Procédé selon la revendication 3, dans lequel l'agent de pré-traitement comprend du chlorure ferrique.

**5.** Procédé selon la revendication 1, dans lequel le parasiticide est choisi dans le groupe consistant en : l'hexaflumuron, le lufénuron, le diflubenzuron, l'émamectine, l'azaméthiphos et la deltaméthrine.

**6.** Procédé selon la revendication 5, dans lequel le parasiticide est l'hexaflumuron, le lufénuron et le diflubenzuron.

**7.** Procédé selon l'une quelconque des revendications 1 à 6, dans lequel le parasiticide est l'hexaflumuron ; et dans lequel le microfiltre est composé d'un matériau choisi parmi du papier ou un polymère de polypropylène.

8. Procédé selon la revendication 7, dans lequel le microfiltre de polypropylène a une taille de pore de moins de 2 $\mu$m, et le microfiltre de papier a une taille de pore de moins de 4 $\mu$m.

9. Procédé selon la revendication 8, dans lequel l'hexaflumuron est filtré à partir d'eau salée à l'aide d'un microfiltre en papier de 4 $\mu$m de taille de pore, ou de l'hexaflumuron est filtré à partir d'eau douce avec un microfiltre en papier de moins de 0,5 $\mu$m de taille de pore ; et dans lequel le rendement de filtration vaut jusqu'à 90 % à partir d'eau salée et jusqu'à 80 % à partir d'eau douce.

10. Procédé selon la revendication 9, dans lequel l'hexaflumuron est filtré à partir d'eau salée avec un rendement de filtration allant jusqu'à 99 %.

11. Procédé selon la revendication 9, dans lequel l'hexaflumuron est filtré à partir d'eau douce avec un rendement de filtration allant jusqu'à 92 %.

| Filtration type | Cut off | Nominal feed concentration (ppm) | Retention (%) | Flow rate (L/m2 h) |
|---|---|---|---|---|
| Nanofiltration | 90 Da | 2 | 85 | 2,5 |
| | 270 Da | 2 | 85 | 25 |
| | | 20 | 91 | 20 |
| Ultrafiltration | 15 000 Da | 2 | 92 | 135 |
| | 150 000 Da | 2 | 95 | 270 |
| | | 20 | 99 | 140 |
| Microfiltration | 0,1 μm | 2 | 95 | 285 |
| | | 20 | 100 | 138 |
| | 0,2 μm | 20 | 100 | 110 |
| | 0,45 μm | 2 | 95 | 255 |
| Paper filtration | 0,4 μm | 10 | 99 | 2700 |
| | 0,8 μm | 10 | 99 | 3500 |
| | 4 μm | 6 | 99 | 1450 |
| | | 10 | 97 | 4900 |
| Steel filtration | 4 μm | 2 | 34 | 390 |
| Polypropylene filtration | 1 μm | 20 | 82 | 997 |
| | 2 μm | 20 | 38 | 1660 |
| | 5 μm | 20 | 17 | 2000 |

Fig. 1

| Filtration type | Cut off | Nominal feed concentration (ppm) | Retention (%) | Flow rate (L/m2 h) |
|---|---|---|---|---|
| Paper filter | 0,4 | 2 | 88 | 2780 |
| | | **20** | **92** | **1363** |
| | 0,8 | 2 | 79 | 3860 |
| | | 20 | 87 | 2540 |
| | 4 | 2 | 61 | 3700 |
| | | 20 | 80 | 2200 |
| | 5 | 2 | 21 | 5400 |
| | | 20 | 28 | 5280 |
| Stainless steel filter | 4 | 2 | 32 | 380 |
| Polypropylene filter | 1 | 2 | 71 | 3200 |
| | | 20 | 84 | 2516 |
| | 2 | 2 | 54 | 4500 |
| | | 20 | 64 | 3800 |
| | 5 | 2 | 34 | 16000 |
| | | 20 | 28 | 9900 |

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Desalination,* 2008, vol. 224, 57-63